# EUROPÄISCHE PATENTANMELDUNG

(11) **EP 1 637 746 A2**
(43) Veröffentlichungstag der Anmeldung: **22.03.2006**
(21) Anmeldenummer: 05018986.9
(22) Anmeldetag: 01.09.2005
(51) Int. Cl.: F15B 15/14

(54) **Hydraulikzylinder, insbesondere Geberzylinder eines hydraulischen Kupplungsausrücksystems**

(30) Priorität: 17.09.2004 DE 102004045112
(71) Anmelder: LuK Lamellen und Kupplungsbau Beteiligungs KG, 77815 Bühl (DE)
(72) Erfinder: Rammhofer, Thomas, 77880 Sasbach (DE)
(74) Vertreter: Duschl, Edgar Johannes

(57) **Zusammenfassung**

Es wird ein Hydraulikzylinder, insbesondere ein Geberzylinder (1) eines hydraulischen Kupplungsausrücksystems, mit einem in einem Zylindergehäuse (2) geführten Kolben (5) vorgeschlagen, welcher mittels einer Kolbenstange (6) bewegbar ist, wobei an dem Kolben (5) zumindest ein mitbewegbares Dichtelement (10,11,12) vorgesehen ist.

## Beschreibung

Die vorliegende Erfindung betrifft einen Hydraulikzylinder, insbesondere einen Geberzylinder eines hydraulischen Kupplungsausrücksystems, mit einem in einem Zylindergehäuse geführten Kolben, welcher mittels einer Kolbenstange bewegbar ist.

Aus dem Stand der Technik sind Hydraulikzylinder zum Betätigen eines Hydrauliksystems hinreichend bekannt. Beispielsweise kann die Kupplung eines Fahrzeuges durch ein Kupplungsausrücksystem mit einem Geber- und einem Nehmerzylinder hydraulisch betätigt werden. Der Geberzylinder umfasst einen in einem mit Fluid durchströmbaren Zylindergehäuse geführten Kolben, der über eine Kolbenstange bewegbar ist. Üblicherweise ist das Zylindergehäuse aus Kunststoff gefertigt und weist einen Zulaufanschluss und einen Druckanschluss sowie einen als Sackloch gestalteten Druckraum auf, in dem der Kolben axial verschiebbar vorgesehen ist. Der Druckraum wird durch eine Führungshülse gebildet, welche den Kolben umschließt. Der Kolben ist mit dem dem äußeren Endanschlag zugewandten Ende an der Kolbenstange befestigt, sodass der Kolben entsprechend betätigt werden kann.

Es hat sich gezeigt, dass insbesondere im Bereich des der Kolbenstange zugewandten Endes des Kolbens Schmutzpartikel in den Druckraum gelangen können. Dies kann dazu führen, dass an den Reibflächen zwischen dem Kolben und der Innenwand der Führungshülse Beschädigungen auftreten können. Dies kann in nachteiliger Weise zu Betriebsstörungen bei dem bekannten Hydraulikzylinder führen.

Demnach liegt der vorliegenden Erfindung die Aufgabe zugrunde, einen Hydraulikzylinder der eingangs genannten Gattung vorzuschlagen, bei dem das Eindringen von unerwünschten Fremdpartikeln in den Druckraum verhindert wird.

Diese Aufgabe wird erfindungsgemäß dadurch gelöst, dass ein Hydraulikzylinder, insbesondere ein Geberzylinder eines hydraulischen Kupplungsausrücksystems, mit einem in einem Zylindergehäuse geführten Kolben vorgeschlagen wird, welcher mittels einer Kolbenstange bewegbar ist, wobei an dem Kolben zumindest ein mitbewegbares Dichtelement vorgesehen ist.

Durch das aufgrund der Bewegung des Kolbens mitbewegte Dichtelement kann sicher vermieden werden, dass Schmutzpartikel oder dergleichen in den Spalt zwischen dem Kolben und der Innenwand des Zylindergehäuses eindringen können, sodass die Lebensdauer des hydraulischen Systems verlängert wird. Des Weiteren ergibt sich der Vorteil, dass durch das an dem Kolben vorgesehene Dichtelement kein zusätzlicher Bauraum erforderlich ist, so dass eine kompakte Bauweise des Hydraulikzylinders ermöglicht wird. Insgesamt kann dadurch ein besonders robuster Hydraulikzylinder realisiert werden, welcher insbesondere unter ungünstigen Rand- bzw. Umgebungsbedingungen ohne weiteres betrieben werden kann.

Im Rahmen einer vorteilhaften Ausführungsform der vorliegenden Erfindung kann vorgesehen sein, dass das Dichtelement z.B. als Lippendichtung oder dergleichen mit einem Grundkörper und zumindest einer daran bevorzugt angeformten Dichtlippe ausgebildet ist. Da der Kolben in der Regel einen etwa kreisförmigen Querschnitt aufweist, kann vorzugsweise ein Lippendichtring als Dichtelement eingesetzt werden, welcher an der gesamten Mantelfläche des Kolbens anliegt. Die vorgesehene bewegende Dichtung ist besonders vorteilhaft, da sich die Lippendichtung mit dem abzudichtenden Bauteil mitbewegt und somit sicherstellt, dass die Dichtfunktion in jeder Position des abzudichtenden Bauteils gewährleistet wird.

Gemäß einer Weiterbildung der vorliegenden Erfindung kann der Grundkörper derart an dem Kolben befestigt sein, dass die Dichtlippe etwa an der Innenwand des den Dichtraum bildenden Zylindergehäuses dichtend entlanggleitet, wobei jede Dichtlippe vorzugsweise in Bewegungsrichtung des Kolbens in seine ausgezogene Position ausgerichtet ist. Der Lippendichtring kann vorzugsweise im Bereich des der Kolbenstange zugewandten Endes des Kolbens angeordnet sein. Die Anordnung des Dichtelements an dieser Position des Kolbens ist besonders vorteilhaft, da sich der Kolben des erfindungsgemäßen Hydraulikzylinders überwiegend im unbetätigten Zustand befindet, in welchem sich der Kolben in der vollständig ausgefahrenen Position befindet, sodass das Eindringen von Schmutzpartikeln in den Druckraum durch das im Bereich des Kolbenanschlagpunktes befindliche Dichtelement vermieden wird, da der Spalt durch die Dichtlippe vollständig abgedeckt wird. Sollte sich der Kolben in einer anderen Position befinden, beispielsweise in der eingefahrenen Position bei der Kupplungsbetätigung, kann das Eindringen von Schmutzpartikeln in den Geberzylinder dadurch verhindert werden, dass der Kolben beim Einkuppeln wieder vollständig herausgefahren wird, sodass die Dichtlippe des Lippendichtringes ebenfalls mitbewegt wird und dabei möglicherweise eingedrungene Schmutzpartikel wieder aus dem Geberzylinder befördert werden.

Eine mögliche Ausführungsform der vorliegenden Erfindung kann als Befestigungsart des Dichtelements ein formschlüssiges Verbinden mit dem Kolben vorsehen. Auf diese Weise sind keine zusätzlichen Befestigungselemente notwendig, da das Dichtelement aufgrund seiner äußeren Form an dem entsprechend komplementär geformten Befestigungsabschnitt des Kolbens gehalten wird. Es sind auch andere Befestigungsarten denkbar.

Eine Möglichkeit für eine formschlüssige Verbindung kann dadurch realisiert werden, dass der Kolben an seinem der Kolbenstange zugewandten Ende eine radiale Hinterschneidung oder dergleichen aufweist, in der das Dichtelement lösbar gehalten ist. Vorzugsweise kann der Grundkörper des Dichtelements in der Hinterschneidung aufgenommen sein, so dass die Dichtlippe an der Innenwand des Zylindergehäuses entlang geführt werden kann.

Im Rahmen einer weiteren Ausführungsform der vorliegenden Erfindung kann zur Befestigung des Dichtelements vorgesehen sein, dass das Dichtelement in axialer Richtung an dem der Kolbenstange zugewandten Ende des Kolbens befestigt ist. Bei dieser Art der Befestigung kann das als Lippendichtring ausgebildete Dichtelement beispielsweise an den Kolben mit dem Grundkörper z. B. angespritzt sein. Es ist jedoch auch denkbar, dass eine lösbare Befestigung zum Einsatz kommt.

Eine nächste Ausführungsform der vorliegenden Erfindung kann vorsehen, dass zum Befestigen des Dichtelements eine Kolbenklammer verwendet wird, welche zusätzlich zum Befestigen der Kolbenstange an dem Kolben vorgesehen ist. Beispielsweise kann das Dichtelement im Wesentlichen zwischen dem der Kolbenstange zugewandten Ende des Kolbens und der Kolbenklammer in einer von diesen Bauteilen gebildeten Ausnehmung befestigt sein. Diese Art der Befestigung ist besonders kostengünstig, da lediglich bereits vorhandene Bauelemente zum Befestigen des Dichtelements verwendet werden.

Als Werkstoff für das verwendete Dichtelement kann vorzugsweise ein thermoplastischer Elastomer oder dergleichen verwendet werden. Andererseits ist die Verwendung von kostengünstigem EPDM vorteilhaft, welches auch als Ethylen-Propylen-Dien bezeichnet wird. Dieser Werkstoff zeichnet sich insbesondere dadurch aus, dass er besonders kostengünstig ist, so dass die Herstellungskosten des Dichtelements bei dem erfindungsgemäßen Hydraulikzylinder besonders gering sind.

Eine weitere Ausführungsform der Erfindung kann vorsehen, dass zumindest ein weiteres Dichtelement an dem Hydraulikzylinder vorgesehen ist, um die Dichtungsfunktion des erfindungsgemäßen Hydraulikzylinders weiter zu verbessern. Das weitere Dichtelement kann beispielsweise mit einem ersten Ende zylindergehäuseseitig und mit einem zweiten Ende kolbenstangenseitig befestigt sein. Vorzugsweise kann als Dichtelement ein außenliegender Gummibalg oder eine Schutzkappe verwendet werden. Ferner ist es denkbar, dass zumindest ein Dichtelement ortfest z. B. an der Innenwand des Zylindergehäuses vorgesehen wird.

Besonders vorteilhaft ist es, wenn ein als Kolbenanschlag dienendes Ende einer Führungshülse des Zylindergehäuses des erfindungsgemäßen Hydraulikzylinders segmentweise unterteilt ist. Auf diese Weise kann die Dichtlippe des mitbewegten Dichtelements Schmutzpartikel durch die Zwischenräume der unterteilten Führungshülse an die Umgebung befördern.

Aufgrund des Aufbaus des erfindungsgemäßen Hydraulikzylinders mit dem sich mitbewegenden Dichtelement wird ein modulares System realisiert, so dass der erfindungsgemäße Hydraulikzylinder wahlweise mit oder auch ohne z. B. Lippendichtring, je nach gewünschtem Einsatzzweck, ausgeführt bzw. eingesetzt werden kann.

Ein weiterer Vorteil bei dem erfindungsgemäßen Hydraulikzylinder ergibt sich daraus, dass es bei der Verwendung von einem sich mitbewegenden Dichtelement unerheblich ist, ob eventuell eine kurze Kolbenstange und ein dadurch bedingt großer Schwenkwinkel der Kolbenstange auftritt. Dies ist deshalb kein Problem, da bei dem erfindungsgemäßen Hydraulikzylinder quasi ein innenliegendes Dichtelement verwendet wird, welches unabhängig von der Kolbenstangenbewegung die Dichtfunktion gewährleistet.

Nachfolgend wird die vorliegende Erfindung anhand der Zeichnungen näher erläutert. Es zeigen:
- Figur 1: eine geschnittene Teilansicht einer ersten Ausführungsform eines erfindungsgemäßen Hydraulikzylinders;
- Figur 2: eine geschnittene Teilansicht einer zweiten Ausführungsform des Hydraulikzylinders; und
- Figur 3: eine geschnittene Teilansicht einer dritten Ausführungsform des Hydraulikzylinders.

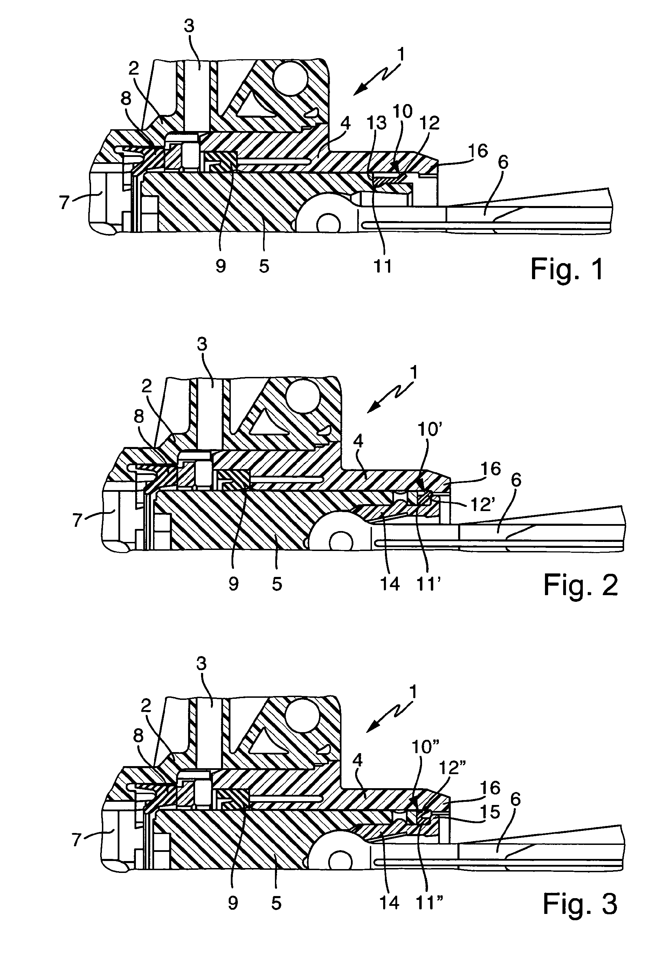

In den Figuren 1 bis 3 sind verschiedene Ausführungsformen eines Hydraulikzylinders gemäß der vorliegenden Erfindung dargestellt. Bei diesen Ausführungsformen der vorliegenden Erfindung ist der Hydraulikzylinder als Geberzylinder 1 eines hydraulischen Ausrücksystems, welches nicht weiter dargestellt ist, ausgebildet.

Der Geberzylinder 1 weist bei sämtlichen Ausführungsformen ein aus Kunststoff gefertigtes Zylindergehäuse 2 auf, an dem ein Zulaufanschluss 3, der mit einem nicht weiter dargestellten Druckmittelreservoir in Verbindung steht, und ein ebenfalls nicht dargestellter Druckanschluss vorgesehen ist, an dem eine Druckleitung anschließbar ist.

An dem Zylindergehäuse 2 ist eine Führungshülse 4 befestigt, in der der Kolben 5 bewegbar geführt ist. Der Kolben 5 ist an einem Ende mit einer Kolbenstange 6 verbunden, mit der der Kolben 5 betätigt wird. Im Inneren des Zylindergehäuses 2 wird ein Druckraum 7 gebildet, der durch den bewegbaren Kolben 5 begrenzt wird. Zur druckraumseitigen Abdichtung des Kolbens 5 umfasst der Geberzylinder 1 eine Primärdichtung 8 und eine Sekundärdichtung 9, die jeweils als ortsfeste Nutringdichtung ausgebildet sind. Die Primärdichtung 8 ist außenseitig in einem zum Druckraum 7 radial gestuften Bereich an der Innenwand des Zylindergehäuses 2 geführt. Bei betätigtem Geberzylinder liegt die Primärdichtung 8 an der Mantelfläche des Kolbens 5 dichtend an. Die Sekundärdichtung 9 ist an einer Schulter der Führungshülse 4 abgestützt und liegt ebenfalls an der Mantelfläche des Kolbens 5 an.

Erfindungsgemäß ist an dem Kolben 5 ein mitbewegbares und nicht ortsfestes Dichtelement vorgesehen. Dadurch wird verhindert, dass im Bereich des der Kolbenstange 6 zugewandten Endes des Kolbens 5 Schmutzpartikel aus der Umgebung in den Geberzylinder 1 eindringen können. Als Dichtelement ist ein Lippendichtring 10, 10', 10" mit einem Grundkörper 11, 11', 11" und zumindest einer daran angeformten Dichtlippe 12, 12', 12" vorgesehen.

Gemäß einer in Figur 1 dargestellten ersten Ausführungsform ist vorgesehen, dass der Dichtlippenring 10 radial an den Kolben 5 angeknüpft ist. Dazu weist der Kolben 5 eine radiale Hinterschneidung 13 auf, in der der Grundkörper 11 formschlüssig aufgenommen ist. Die an dem Grundkörper 11 befestigte Dichtlippe 12 erstreckt sich in Auszugrichtung des Kolbens 5. Die Ausrichtung der Dichtlippe 12, 12' 12" ist bei sämtlichen Ausführungsformen identisch, da somit eventuell vorgesehene Schmutzpartikel bei der Betätigung des Geberzylinders 1 aus dem Geberzylinder 1 mit der Dichtlippe 12, 12' 12" befördert werden.

In Figur 2 ist eine zweite Ausführungsform des erfindungsgemäßen Geberzylinders 1 dargestellt, bei der der Lippendichtring 10' axial an dem Kolben 5 befestigt ist. Dazu kann der Grundkörper 11' des Lippendichtringes 10' an einem der Kolbenstange 6 zugewandten Ende des Kolbens 5 angespritzt sein, sodass die Dichtlippe 12' die vorbeschriebene Ausrichtung aufweist und dichtend an der Innenwand der Führungshülse 4 entlanggleitet.

In Figur 3 ist eine dritte Ausführungsform des erfindungsgemäßen Geberzylinders 1 dargestellt. Bei dieser Ausführungsform wird der Lippendichtring 10" zwischen dem Kolben 5 und einer Kolbenklammer 14 gehalten. Dazu wird der Lippendichtring 10" zwischen dem der Kolbenstange 6 zugewandten Ende des Kolbens 5 und der Kolbenklammer 14 in einer auf diese Weise gebildeten Ausnehmung 15 befestigt. Der Grundkörper 11" des Lippendichtringes 10" ist in der Ausnehmung 15 gehalten, so dass die Dichtlippe 12" an der Innenwand der Führungshülse 4 bei der Bewegung des Kolbens 5 entlanggleiten kann.

Die jeweilige Dichtlippe 12, 12', 12" des Lippendichtringes 10, 10', 10" liegt bei sämtlichen Ausführungsformen nur leicht an der Innenwand der Führungshülse 4 an, sodass die Verschiebekräfte zum Bewegen des Kolbens 5 minimal sind.

Vorzugsweise kann das als Kolbenanschlag 16 dienende Ende der Führungshülse 4 segmentiert sein, so dass Schmutzpartikel auf einfachste Weise durch den mitbewegenden Lippendichtring 10, 10', 10" entfernt werden können, wobei, zumindest in vertikaler Richtung, eine ebene Verbindung nach außen realisiert wird.

### Bezugszeichenliste

- 1: Geberzylinder
- 2: Zylindergehäuse
- 3: Zulaufanschluss
- 4: Führungshülse
- 5: Kolben
- 6: Kolbenstange
- 7: Druckraum
- 8: Primärdichtung
- 9: Sekundärdichtung
- 10, 10', 10": Lippendichtring
- 11, 11', 11": Grundkörper
- 12, 12', 12": Dichtlippe
- 13: Hinterschneidung
- 14: Kolbenklammer
- 15: Ausnehmung
- 16: Kolbenanschlag

## Patentansprüche

1. Hydraulikzylinder, insbesondere Geberzylinder (1) eines hydraulischen Kupplungsausrücksystems, mit einem in einem Zylindergehäuse (2) geführten Kolben (5), welcher mittels einer Kolbenstange (6) bewegbar ist, **dadurch gekennzeichnet, dass** an dem Kolben (5) zumindest ein mitbewegbares Dichtelement vorgesehen ist.

2. Hydraulikzylinder nach Anspruch 1, **dadurch gekennzeichnet, dass** das Dichtelement als Lippendichtring (10, 10', 10") mit einem Grundkörper (11, 11', 11") und zumindest einer daran angeformten Dichtlippe (12, 12', 12") ausgebildet ist.

3. Hydraulikzylinder nach Anspruch 2, **dadurch gekennzeichnet, dass** der Grundkörper (11, 11', 11") derart an dem Kolben (5) befestigt ist, dass die Dichtlippe (12, 12', 12") etwa an der Innenwand des Zylindergehäuses (2) dichtend entlanggleitet, wobei sich die Dichtlippe (12, 12', 12") in Richtung der Auszugbewegung des Kolbens (5) erstreckt und im Bereich des der Kolbenstange (6) zugewandten Endes des Kolbens (5) befestigt ist.

4. Hydraulikzylinder nach einem der vorangehenden Ansprüche, **dadurch gekennzeichnet, dass** das Dichtelement formschlüssig an dem Kolben (5) befestigt ist.

5. Hydraulikzylinder nach Anspruch 4, **dadurch gekennzeichnet, dass** der Kolben (5) an seinem der Kolbenstange (6) zugewandten Ende eine radiale Hinterschneidung (13) aufweist, in der das Dichtelement lösbar gehalten ist.

6. Hydraulikzylinder nach einem der vorangehenden Ansprüche, **dadurch gekennzeichnet, dass** das Dichtelement in axialer Richtung an dem der Kolbenstange (6) zugewandten Ende des Kolbens (5) befestigt ist.

7. Hydraulikzylinder nach einem der vorangehenden Ansprüche, **dadurch gekennzeichnet, dass** das Dichtelement mittels einer an dem Kolben (5) befestigten Kolbenklammer (14) zum Befestigen der Kolbenstange (6) gehalten ist.

8. Hydraulikzylinder nach Anspruch 7, **dadurch gekennzeichnet, dass** das Dichtelement im Wesentlichen zwischen dem der Kolbenstange (6) zugewandten Ende des Kolbens (5) und der Kolbenklammer (14) in einer gebildeten Ausnehmung (15) befestigt ist.

9. Hydraulikzylinder nach einem der vorangehenden Ansprüche, **dadurch gekennzeichnet, dass** als Werkstoff für das Dichtelement ein thermoplastischer Elastomer vorgesehen ist.

10. Hydraulikzylinder nach einem der vorangehenden Ansprüche, **dadurch gekennzeichnet, dass** zumindest ein weiteres Dichtelement vorgesehen ist, welches mit einem ersten Ende zylindergehäuseseitig und mit einem zweiten Ende kolbenstangenseitig befestigt ist.

11. Hydraulikzylinder nach einem der vorangehenden Ansprüche, **dadurch gekennzeichnet, dass** ein als Kolbenanschlag (16) dienendes Ende einer Führungshülse (4) des Zylindergehäuses (2) segmentweise unterteilt ist.
